# EUROPEAN PATENT APPLICATION

(11) **EP 4 002 273 A1**
(43) Date of publication of application: **25.05.2022**
(21) Application number: 21205298.9
(22) Date of filing: 28.10.2021
(51) Int. Cl.: G06T 7/215, G06T 7/246

(54) **TARGET TRACKING USING VIDEO FRAME-TO-FRAME TRANSLATION OF THE BOUNDING BOXES OF RECOGNISED TARGETS**

(30) Priority: 13.11.2020 IT 202000027236
(71) Applicant: Geoinference S.r.l., 38068 Rovereto, (TN) (IT)
(72) Inventor: Demaria, Andrea, 38068 Rovereto TN (IT); Maffione, Eugenio Maria, 38068 Rovereto TN (IT)
(74) Representative: Perani & Partners S.p.A.

(57) **Abstract**

A method for monitoring (100) targets (10) located in an environment (20) by an imaging device (30), said method comprising the steps of: capturing (110) by the imaging device (30) a first image stream of the environment (20), the first captured image stream comprising a plurality of temporally successive frames (60); sending (120) the first image stream to a data processing unit (40); recognizing (130) one or more targets for each frame (60) of the image stream; associating (140) a bounding box (50) with each recognized target (10); defining (150) a translation function (T) for each bounding box (50) as a function of successive frames (60) of the first captured image stream; associating (180) the defined translation function (T) with each bounding box (50) of a frame (60); translating (190) each bounding box (50) with which a translation function (T) defined in the successive frames (60) is associated by means of the translation function; comparing (200) the translated bounding boxes (70) with the bounding boxes (50) associated with the targets recognized in the frame (60) to which the bounding boxes (70) of the previous frames (60) have been translated; updating (210) the one or more targets (10) recognized in each frame (60) as a function of the comparison.

## Description

### Technical field

The present invention relates to a method of monitoring targets, e.g. persons and objects, located in an environment to recognize and identify them. The present invention further addresses an imaging device that can implement the method of monitoring targets.

### Background art

Various algorithms are known in the art which use frame-related information, acquired by an imaging device, to recognize and identify one or more targets in the environment. Once targets are recognized by means of neural networks, these algorithms use information associated with the relative distance between two targets recognized in successive frames or information associated with the maximum overlap between two recognized targets (Intersection Over Union, IOU). Nevertheless, in order to neglect the noise associated with the environment in which the target is located, such as covers or obstacles preventing its detection, prior art algorithms must operate at a given frame rate (FPS). Specifically, the frame rate must allow the target recognized in one frame to be found in the next frame, at most translated by a small distance to be still, according to the algorithm, below the IOU overlap threshold or within the distance of the same object in the previous frame.

### Problems of the prior art

Prior art algorithms, based on the detection of maximum IOU overlap of the recognized targets of two successive frames or based on the reduction of the distances between two recognized targets in two frames, have recognition and target counting errors. Specifically, such algorithms have significant errors when i) there is a large number of recognized targets having a corresponding bounding box associated therewith, for example in orchards, ii) the recognized targets are arranged side by side with a high concentration, for example groups of objects (fruits on trees) or persons, iii) the identified targets are not consistent from frame to frame because they are partially or totally covered by an obstacle in one frame and reappear in the next frame, iv) when the available frame rate is low, because object overlap or detection of significant distances may be missed.

Furthermore, it should be noted that such algorithms require a large number of frame rates for object recognition and have a high computational cost.

### Object of the invention

The object of the present invention is to provide a method and a device that can obviate the above discussed drawbacks of the prior art.

In particular, the present invention has the object to provide a method that can improve detection and counting of targets in an environment while reducing the required computational cost.

The aforementioned technical purpose and objects are substantially fulfilled by a method of monitoring targets and an imaging device that comprise the technical features as disclosed in one or more of the accompanying claims.

### Benefits of the invention

Advantageously, the method and device of the present invention can optimize target recognition results by utilizing and merging the information deriving from successive frames.

Advantageously, the method and device of the present invention can use a reduced frame rate without incurring tracking errors, thus optimizing the utilization of resources.

### BRIEF DESCRIPTION OF THE FIGURES

Further features and advantages of the present invention will result more clearly from the illustrative, non-limiting description of a preferred, non-exclusive embodiment of a method of monitoring targets and an imaging device as shown in the accompanying drawings:
- Figure 1 shows a block diagram of the monitoring method according to one embodiment of the present invention;
- Figure 2 shows a block diagram of the monitoring method according to one embodiment of the present invention;
- Figure 3 shows an imaging device according to one embodiment of the present invention;
- Figure 4 schematically shows a top view of an environment in which an imaging device according to one embodiment of the present invention is located;
- Figure 5 schematically shows a succession of frames on which the monitoring method according to the embodiment of Figure 1 is applied.

### DETAILED DESCRIPTION

Even when not expressly stated, the individual features as described with reference to the particular embodiments shall be intended as auxiliary to and/or interchangeable with other features described with reference to other exemplary embodiments.

The present invention relates to a method of monitoring targets 100 arranged in one environment 20. Preferably, the method of monitoring targets 100 is carried out by an imaging device 30 as described hereinbelow. The method of the present invention can detect targets 10 in the environment 20 and correct errors caused by data acquisition, preferably associated with targets being masked by the environment, and errors caused by detection and/or recognition of targets 10. Specifically, the imaging device 30 can capture frames of the environment being imaged and hence of the targets 10 in the frame of the imaging device 30.

As used herein, a target 10 refers to any object, subject and entity in an environment 20. For example, a target 10 may refer to fruit and vegetables and/or persons and/or animals and/or vehicles.

As used herein, an environment 20 refers to any place imaged by the imaging device 30, for example an orchard and/or a square or a road.

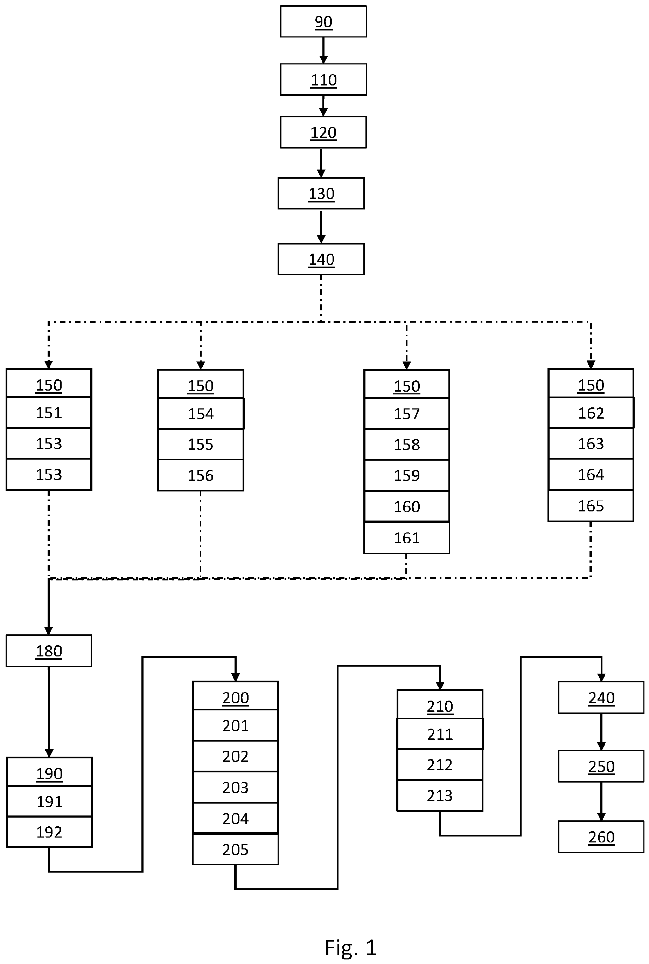

The method of monitoring targets 100 of the present invention comprises the following steps, that are carried out according to a preferred embodiment as shown in Figure 1.

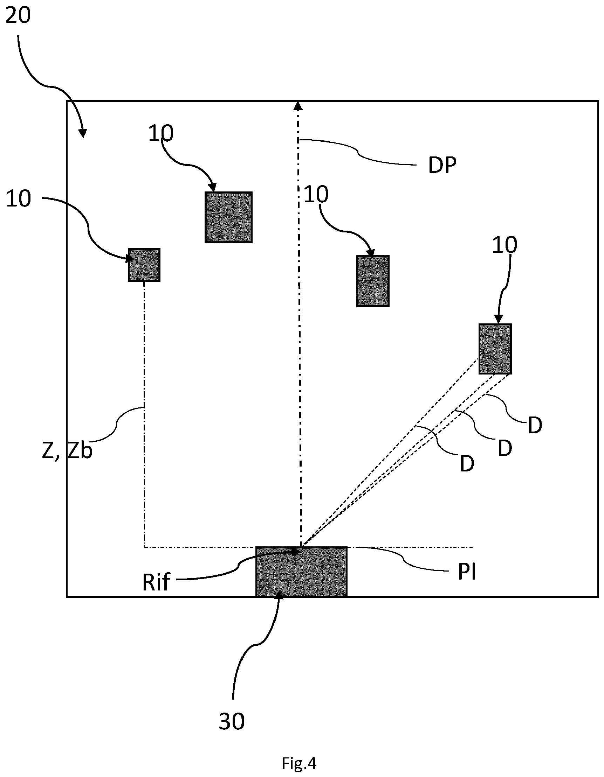

According to a preferred embodiment, the method for monitoring targets 100 comprises a preliminary step of defining 90 a reference system Rif with respect to the imaging device 30, Figure 4. In particular, the reference system Rif defines an image plane PI, preferably associated with the imaging device 30, and a depth dimension DP extending from the image plane PI, preferably from the imaging device 30. More preferably, the reference system Rif defines the image plane PI on two-dimensional images captured by the imaging device 30 and the depth dimension DP along which a distance value D from the image plane PI can be measured. Even more preferably, the reference system Rif can define spatial coordinates X and Y on the image plane PI and Z on the depth dimension DP.

The method of monitoring targets 100 comprises a step of capturing 110 by the imaging device 30 a first image stream. In particular, the first image stream relates to the environment 20. Preferably, the first image stream comprises two-dimensional color images of the environment 20. It should be noted that each image of the first image stream is defined by a plurality of pixels. In other words, the first image stream comprises a plurality of temporally successive frames 60 and each image is preferably represented by a frame 60. It should be noted that each image in the first image stream is associated with the image plane PI.

Specifically, the step of capturing 110 includes capturing the first image stream in the field of View (FOV) of the imaging device 30.

According to a preferred embodiment, the step of capturing 110 by the imaging device 30 includes capturing a second image stream. On the other hand, the second image stream relates to distance values D of the pixels from the reference system Rif. In other words, the second image stream detects distance values D from the reference system Rif to the targets 10 in the environment 10. Preferably, the second image stream comprises a plurality of distance values D that can be associated with the pixels of the images of the first image stream. More preferably, the second image stream comprises a plurality of frames each comprising a plurality of distance pixels each associated with a distance value D, if detected. In particular, the second image stream comprises a plurality of temporally successive frames comprising distance values. It should be noted that each distance value D is associated with the depth dimension DP. Specifically, the step of capturing 120 includes capturing the first image stream and the second image stream in the field of View (FOV) of the imaging device 30.

The method of monitoring targets 100 comprises a step of sending 120 the first image stream to a data processing unit 40. Namely, the step of sending 120 includes sending the first image stream from the imaging device 30 to the data processing unit 40 in signal communication with the imaging device 30. More preferably, the method of monitoring targets 100 comprises a step of at least temporarily storing the first image stream in the data processing unit 40. In particular, the temporary storage of the first image stream optimizes computational resources for the subsequent steps.

According to a preferred embodiment in which the method of monitoring images capturing also the second image stream, the step of sending 120 includes sending the second image stream with the first image stream to the data processing unit 40. Furthermore, the step of sending includes at least temporarily storing 121 the second image stream with the first image stream in the data processing unit 40. Preferably, the method of monitoring 100 comprises a step of synchronizing the first image stream and the second image stream. Preferably, the step of synchronizing includes associating each pixel of the images of the first image stream with a corresponding distance value D of the second image stream. More preferably, the method of monitoring targets 100 comprises a step of storing the synchronization between the first image stream and the second image stream resulting from the step of synchronizing.

The method of monitoring targets 100 comprises a step of recognizing 130 one or more targets 10 in the images of the first image stream, preferably in each frame of the first image stream. More preferably, the step of recognizing 130 includes analyzing each image, or each frame 60, of the first image stream to recognize the targets 10 in the corresponding image. It should be noted that the step of recognizing one or more targets 130 includes recognizing one or more targets 10 with respect to a background. According to a preferred embodiment, the step of recognizing 130 one or more targets in the images of the first image stream is performed by means of a neural network-based environment-related algorithm. Preferably, the neural network-based algorithm is optimized by size, namely quantized. More preferably, the neural network-based algorithm is trained to recognize one or more targets 10 in the images of the first image stream. Even more preferably, the neural network-based algorithm is configured, in other words trained, to recognize specific targets 10 based on the environment 20. For example, if capturing of the first image stream occurs in an orchard, the neural network-based algorithm may be trained to recognize the fruit species in the orchard. Otherwise, for example, if the first image stream is captured in a street or a square, the neural network-based algorithm is trained to recognize persons.

Advantageously, the use of an optimized quantized neural network-based algorithm configured to recognize targets 10 in a specific environment 20 reduces the required computational cost.

According to a preferred embodiment, the step of recognizing 130 comprises the steps of geolocating the imaging device 30 to recognize the environment in which the imaging device 30 is placed. Then, once the environment has been recognized, the step of recognizing 130 comprises a step of loading the neural network-based algorithm suitable for the recognized environment.

Advantageously, loading of a specific algorithm allows the method to be adapted to different types of environment while maintaining a reduced computational cost.

The method of monitoring targets 100 comprises a step of associating 140 a bounding box 50 with each recognized target 10. In particular, the step of associating 140 includes introducing a recognized target 10 into a bounding box 50. In detail, one or more bounding boxes 50 are identified on each image of the first image stream as a function of the recognized targets 10. Preferably, each bounding box is associated with bounding box coordinates Xb, Yb on the image plane, with respect to the reference system Rif. More preferably, each bounding box 50 is associated with spatial coordinates with respect to the reference system Xb, Yb, Zb in the embodiment in which the second image stream is also captured.

For the purposes of the present invention, a bounding box 50 refers to a quadrangle, for example a square or a rectangle, surrounding the target with which corresponding image pixels of the first image stream are associated. It should be noted that each bounding box 50 has a plurality of sides, preferably four sides, with which pixels are associated.

For the purposes of the present invention, the lengths of the sides of the bounding boxes 50 are measured based on the pixels associated therewith with respect to the reference system Rif.

Preferably, the bounding box coordinates Xb, Yb include the position of the pixel on the image plane associated with opposite corners of the bounding box with respect to the diagonal. Alternatively, the bounding box coordinates only comprise one corner position as well as width values L and height values H in pixels of the bounding box 50. Alternatively they comprise the position of the centroid C of the bounding box 50

According to a preferred embodiment, the step of associating a bounding box 140 also includes associating a recognition label and a confidence level with each target. Specifically, the confidence level is associated with the extent to which the recognition resulting from the recognition step 130 is confident that the object has been actually recognized.

The method of monitoring targets 100 comprises a step of defining 150 a translation function T for each bounding box 50 as a function of successive frames 60 of the captured image stream; Preferably, by defining the translation function T, predicted positioning of the bounding box 50 and hence of the target 10 associated therewith, can be calculated, at a subsequent time instant, i.e. in the next frame, as a function of a relative movement detected between the imaging device 30 and the environment 20 and/or between the imaging device 30 and recognized targets 10 and/or between the imaging device 30 and the background or distinctive elements defined therein, as described below. In other words, the translation function T defined as a function of successive frames 60 allows a bounding box 50 to be translated to successive frames 60 by predicting its position as a function of movements detected between successive frames.. More preferably, the step of defining 150 a translation function T allows each bounding box 50 to be projected to successive frames to properly identify the targets 10 in the environment 20.

Preferably, the step of defining 150 a translation function includes a preliminary step of defining a list of targets. In particular, this step of defining the list of targets includes associating each recognized target with at least the corresponding label and a position associated with the corresponding bounding box 50. It should be noted that the list of targets, initially empty, is filled with the targets 10 recognized in the environment as a function of the captured image stream. Specifically, the list of targets comprises each target recognized in the frame 60 of the first image stream with which at least one label and a position with respect to the bounding box 50 are associated. For example, the position entered in the list of targets associated with the bounding box 50 may be the centroid of the bounding box 50 or the bounding box coordinates 50. Advantageously, with the list of targets the recognized targets 10 appearing in the first image stream and viewed by the imaging device 30 can be monitored and controlled .

Alternative translation function definition embodiments are described below.

According to a preferred embodiment, the step of defining a translation function 150 comprises the steps of detecting 151 a relative movement between the recognized targets 10 in the environment 20 in successive frames 60 as a function of the bounding boxes 50 associated with the recognized targets 10. Thus, the relative movement between the recognized targets 10 and the imaging device 30 may be determined. Specifically, the step of detecting the movement 151 includes comparing the bounding boxes 50 of the recognized targets 10 in successive frames 60, preferably between two successive frames 60, by accounting for the relative movement between the recognized targets 10 in two successive frames 60. In detail, the step of detecting the movement 151 by considering the bounding boxes 50 in two successive frames 60 associated with recognized targets 10 that are deemed to be the same. For example, if the imaging device 30 is moving relative to the targets 10 in the environment 20, the step of detecting the movement 151 by considering the information of the bounding boxes 50 between successive frames, and preferably the movement of the imaging device 30, detects the relative movement between recognized targets 10 and the imaging device 30. Then, the step of defining a translation function 150 comprises the step of calculating 152 a translation vector from the detected movement. In particular, the translation vector is common to the recognized targets 10 and, where possible, allows at least partial association of the bounding boxes 50 of the recognized targets 10 in a frame 60 with the bounding boxes 50 of the homologous recognized targets 10 in the next frame 60. Finally, the step of defining a translation function 150 comprises the step of associating 153 the calculated translation vector with the translation function T. In particular, the step 153 includes defining the translation function as a translation vector that can be applied to the bounding boxes 50.

According to one embodiment that is alternative to the above, the step of defining 150 a translation function T comprises the step of determining 154 a relative position between the bounding boxes 50 in a frame 60 and the bounding boxes 50 of one or more subsequent frames 60. Preferably, the step of determining a relative position 154 includes considering the bounding boxes 50 of multiple successive frames 60, preferably three successive frames, and determining the relative positions between bounding boxes 50. It should be noted that once again the relative movement between recognized targets 10 in successive frames 60 and/or between recognized targets 10 in successive frames and the imaging device 30 may be accounted for, to improve the definition of the translation function T. Next, the step of defining 150 comprises the step of calculating 155 a reference trajectory as a function of the relative positions between the bounding boxes 50 determined between successive frames 60. Finally, the step of defining a translation function 150 comprises the step of associating 156 the calculated reference trajectory with the translation function T. In particular, the step 156 includes defining the translation function as the reference trajectory that can be applied to the bounding boxes 50.

According to one embodiment that is alternative to the above, the step of defining 150 a translation function comprises the steps of selecting 157 a plurality of frames 60, preferably two frames. Next, the step of defining a translation function 150 comprises the step of defining 158 in the selected frames 60 one or more distinctive elements representative of the environment 20. Preferably, the step of defining 158 includes selecting one or more areas in each selected frame 70 and associating one or more distinctive elements with each area. More preferably, the defined distinctive elements are characteristic of the background in the selected area and/or of the recognized targets 10 in the selected area and/or of reference points in the selected area. It should be noted that each defined distinctive element is associated with corresponding coordinates with respect to the reference system Rif to identify a distinctive element position and/or relative positions between distinguishing elements. Then, the step of defining 150 a translation function T comprises the step of calculating 159 a homography between the selected frames 60 by means of homography algorithms as a function of the defined distinctive elements and preferably as a function of the positions of distinctive elements and/or as a function of the relative positions between distinctive elements. Once the homography has been calculated, the step 150 consists in providing 160 a relative displacement of the distinctive elements between the selected frames 60 as a function of the homography. Preferably, the use of homography can determine a transformation matrix representative of the relative displacement of the distinctive elements between selected frames 60 and therefore of a relative displacement between the imaging device 30 and the environment 20. Finally, the step of defining a translation function 150 comprises the step of associating 161 the calculated relative displacement with the translation function T. In particular, the step 161 includes defining the translation function T as the calculated relative displacement as a function of the distinctive elements.

According to one embodiment that is alternative to the above, the step of defining 150 a translation function comprises the steps of acquiring 162 an odometry dataset by the imaging device 30. Preferably, the odometry dataset comprises, in addition to the first image stream, the second image stream and target location data such as SLAM or Global Navigation Satellite System (GNSS). Once the odometry dataset has been acquired, the step 150 includes sending it 163 to the data processing unit 40 to carry out the subsequent steps. Next, the step of defining 150 a translation function comprises the step of defining 164 a translation as a function of the first image stream and of the odometry dataset. Finally, the step of defining a translation function 150 comprises the step of associating 163 the translation with the translation function T. In particular, the step 163 includes defining the translation function T as the calculated translation as a function of the first image stream and the odometry dataset. According to the present embodiment, odometry data associated with the imaging device 30 may be also acquired, for example the speed of the support on which it is placed.

It should be noted that the definition of the translation function varies as a function of the first image stream and hence as a function of the frames that are used for defining the translation function. In other words, the method of monitoring targets includes constantly updating the definition of the translation function T as a function of the first image stream and/or of the relative movement between the imaging device 30 and the environment 20.

Advantageously, with the translation function T the position of a bounding box 50 in successive frames can be predicted irrespective of the frame rate.

Advantageously, by predicting the position of a bounding box in successive frames, the translation function T affords use a small number of frames thus reducing the computational cost required both for acquisition and for the subsequent steps of the method.

Advantageously, according to the captured image stream, the environment 20 and the imaging device 30 as well as the relative movements, the method of monitoring targets 100 with the translation function can use a low frame rate (fps).

For example, the frame rate (fps) ranges from 2 to 10, preferably from 3 to 9, more preferably from 4 to 8.

The method of monitoring targets 100 comprises a step of associating 180 the defined translation function T with a bounding box 50 of a frame 60. By this arrangement, the bounding box 50 can be translated from one frame 60 to subsequent frames 60.

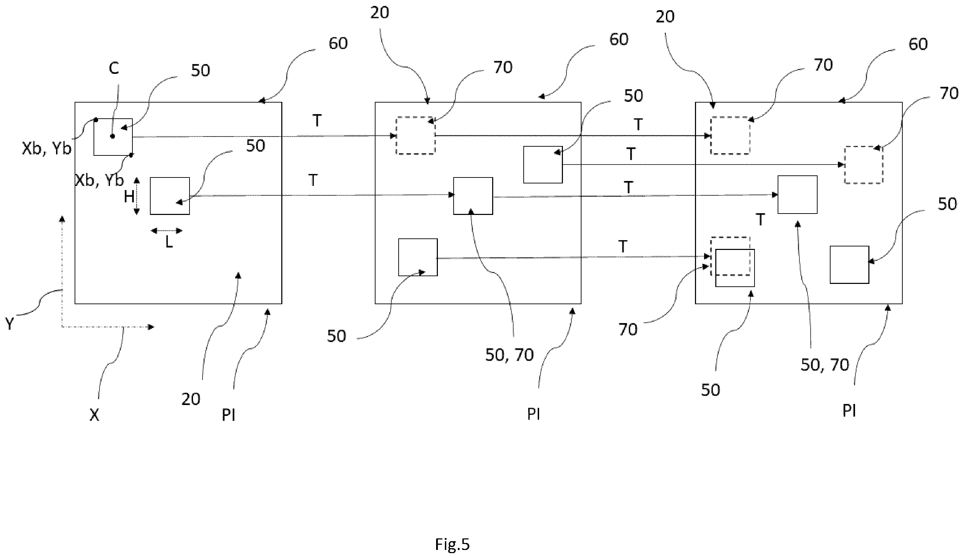

The method of monitoring targets 100 comprises a step of translating 190 each bounding box 50 with which a defined translation function T is associated to the subsequent frames 60 by means of the translation function T, Figure 5. Preferably, the step of translating 190 includes translating the bounding boxes 50 of one frame 60 to the subsequent frames 60. More preferably, the step of translating 190 can translate the bounding boxes 50 of one or more successive frames into a target frame that is temporally subsequent to the frames from which the bounding boxes 50 are translated. It should be noted that for the purposes of the present invention, each frame, preferably excluding the first one in time order, may be considered as a target frame for the previous frames.

According to a preferred embodiment, the step of translating 190 comprises the step of associating an age value 191 with each bounding box 50 as a function of the first image stream. In particular, the age value associated with the bounding box 50 depends on the number of times the target has been recognized in the successive frames, as further described below. Preferably, the step of associating an age value 191 includes updating the list of targets by adding to each recognized target 10 in the list of targets the relative age value of the bounding box 50. For the purposes of the present invention, each bounding box 50 in the list of targets is initially associated with an initial age value that can be incremented during the subsequent steps of the method of monitoring targets 100.

In detail, the step of translating 190 includes translating 192 the bounding boxes 50 to the subsequent frames 60 if the age value associated with the corresponding bounding boxes 50 is lower than an age threshold value. The latter is calculated as a function of the environment 20 and of the relative movement between the targets 10 recognized in the environment 20 and the imaging device 30. Specifically, the age threshold value depends on the relative movement between the targets 10 and the imaging device 30, on the field of View (FOV), and preferably on the distance of targets 10 from the imaging device 30. For example, when monitoring a row of apples, the correct age threshold value is determined considering the length of the row and/or the speed of the drive means associated with the imaging device 30 and/or the distance of the imaging device 30 from the row as well as the corresponding Field of View (FOV). It shall be noted that the age value exceeds an age threshold value when the corresponding target 10 is found to be out of the image stream and from the view of the imaging device 30.

The method of monitoring targets 100 comprises a step of comparing 200 the translated bounding boxes 70 with the bounding boxes 50 associated with the targets recognized in the frame 60 to which the bounding boxes 70 of the previous frames 60 have been translated. Preferably, the step of comparing 200 includes comparing the bounding boxes 50 associated with a target frame with the translated bounding box 70 that have been translated to the target frame from the previous frames. More preferably, the step of comparing 200 is carried out using comparison algorithms residing in the processing unit 40. This will afford determination of the presence of bounding boxes 50 associated with recognized targets 10 which, due to masking caused by the environment 20, are found in one frame and not in the subsequent or preceding frames.

According to a preferred embodiment, the step of comparing 200 comprises the step of determining 201, for each bounding box 50, 70 of the frame 60 to which the bounding boxes 70 have been translated, an overlap value as a function of the translated bounding boxes 70 and the bounding boxes 50 of the frame 60 to which the bounding boxes 70 have been translated. Preferably, the step of comparing 200 includes determining an overlap value of the bounding boxes 70 translated to the target frame and the bounding boxes 50 of the target frame. Thus, the recognized targets 1200 may be subsequently updated as a function of the overlap value. Preferably, the step of comparing 200 allows the list of targets to be updated as a function of the determined overlap value.

Once the overlap value between the translated bounding boxes 70 and the bounding boxes 50 has been determined, the step of comparing 200 comprises the step of generating 202 a recognition signal if the overlap value falls in a first range of threshold values. Preferably, a recognition signal is generated when a translated bounding box 70 overlaps a bounding box 50 of the target frame according to the first range of threshold values.

The step of comparing 200 comprises the step of generating 203 a correction signal if the overlap value falls within a second threshold range. Preferably, a correction signal is generated when a translated bounding box 70 partially overlaps a bounding box 50 of the target frame according to the second range of threshold values. This partial overlap allows the comparison algorithms to determine that the translated bounding box 70, in spite of its deviation from the bounding box 50, is associated with the same recognized target 10. It should be noted that, as described below, the generation of a correction signal includes an update of the list of targets with respect to the position of the corresponding bounding box 50.

The step of comparing 200 comprises the step of generating 204 an addition signal if the overlap value falls within a third threshold range. Preferably, an addition signal is generated when a translated bounding box 70 deviates completely or almost completely from a bounding box 50 of the target frame according to the third threshold range. This deviation allows the comparison algorithms to determine that the translated bounding box 70 and the bounding box 50 are associated with different recognized targets 10. It should be noted that, as described below, the generation of an addition signal includes an update of the list of targets with respect to the bounding box 70, 50 with which a recognized target 10 is associated. It should be noted that the addition signal is associated with the appearance of a recognized target 10 from one frame to another, because the recognized target 10 was masked by the environment 20 in the target frame or in one of the preceding frames and the relative position between the recognized target and the imaging device 30 did not allow detection and hence recognition thereof. For example, when capturing images from an orchard, it may happen that one fruit is covered by another, by a leaf or a branch in a frame, and that the fruit is visible in a subsequent or preceding frame.

According to a preferred embodiment, the step of comparing 200 comprises a step of generating 204 an identification signal if the translated bounding box 70 can be associated with a bounding box 50 that is not visible in the target frame because it is masked. In particular, the comparison algorithm generates an identification signal for a translated bounding box 70 as a function of relative positions of the bounding boxes 50 and the other translated bounding boxes 70.

According to a preferred embodiment, the step of comparing 200 comprises a step of generating a missing signal for a translated bounding box 70 if the target 10 associated with such translated bounding box 70 is missing in the target frame.

The method of monitoring 100 comprises the step of updating 210 the one or more recognized targets 10 in each frame 60 as a function of the comparison. Preferably, the step of updating is carried out whenever the comparison 200 generates a recognition, correction and addition signal. Preferably, the step of updating 210 includes updating the list of targets as a function of the comparison step 200.

According to a preferred embodiment, the step of updating the one or more recognized targets 210 comprises the step of correcting 211 each bounding box 50 if a correction signal for the corresponding bounding box 50 has been generated. Preferably, if a correction signal is generated from the comparison between a translated bounding box 70 and a bounding box 50 of the target frame, the step of correcting 211 includes changing the position of the bounding box 50 according to the correction signal. More preferably, the step of correcting 211 includes updating the list of targets by changing the position of the recognized target 10 associated with the bounding box 50 for which the correction signal has been generated.

The step of updating the one or more recognized targets 210 comprises the step of adding 212 the bounding box 50 to the frame to which the bounding box 70 has been translated if an addition signal has been generated. Preferably, if an addition signal is generated from the comparison between a translated bounding box 70 and a bounding box 50 of the target frame, the step of adding 211 includes adding the bounding box 50 of the target frame according to the comparison signal. More preferably, the step of adding 212 includes updating the list of targets by adding the label and the position of the recognized target 10 associated with the bounding box 50 for which the addition signal has been generated.

Preferably, the step of updating 210 comprises the step of updating the age values 213 associated with the bounding boxes 50 in the list of targets. In particular, the step of updating the age values 213 includes increasing the age value for each bounding box 50 at each translation to the subsequent frames if the recognized target 10 associated with the bounding box 50 is missing in the subsequent frames. In other words, the age value is increased at each translation for which a missing signal associated with the translated bounding box 70 is generated in the comparison step. The step of updating the age values 213 also includes assigning the initial age value to the target if a recognition, correction, identification or addition signal associated with the corresponding bounding box is generated.

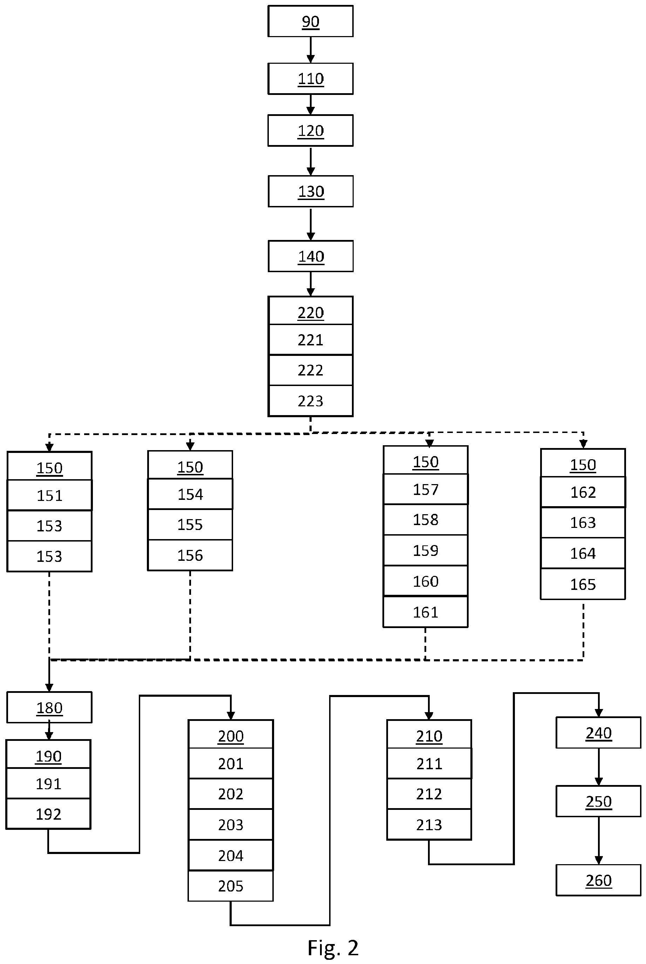

According to an alternative embodiment as shown in Figure 2, that can be combined with the previous steps, the method of monitoring targets 100 comprises a step of converting each frame of the first image stream 220 into respective synthetic frames.

Advantageously, the conversion into synthetic frames affords a size reduction in computational resources of the first image stream that has been captured, thereby facilitating transmission to a processing unit remote from the imaging device.

Preferably, the step of converting each frame 220 comprises the step of associating 221 each bounding box 50 of each frame with position values representative of the bounding box 50, for example the centroid or the coordinates of the bounding box 50. Then, the step of converting each frame 220 comprises the step of constructing 222 a synthetic frame for each frame as a function of the position values of the bounding boxes 50. In particular, each synthetic frame only comprises the bounding boxes 50 located in the synthetic frame as a function of the positions of the bounding boxes 50. Finally, the step of converting each frame 220 comprises the step of associating 223 each frame with the corresponding synthetic frame. The following steps may be thus carried out, i.e. defining a translation function T, associating 180 a translation function T with each bounding box 50, translating 190 each bounding box 50 with which a translation function T is associated to the subsequent synthetic frames by means of the translation function T, comparing 200 the translated bounding boxes 70 with the bounding boxes 50 associated with the targets recognized in the synthetic frame to which the bounding boxes 70 have been translated and updating 210 the one or more targets 10 recognized in each synthetic frame according to the comparison. In other words, the step of converting each frame 220, which is carried out downstream of the step of associating 140 a bounding box 50 with each recognized target 10, allows the subsequent steps of the monitoring method to be carried out on synthetic frames.

Advantageously, the step of converting into synthetic frames allows the method to be carried out not only instantaneously but also with optimized saving of synthetic frames.

Preferably, the method of monitoring targets 100 comprises a step of storing the list of targets and the recognized targets.

According to a preferred embodiment, the method of monitoring targets 100 comprises a step of counting 240 the recognized targets 10 in the first image stream. In particular, the step of counting 240 includes counting the recognized targets 10 in a constantly updated list of targets, and generate a count value.

Preferably, the method of monitoring targets 100 comprises a step of storing 250 the data generated in each step 140, 150, 180, 190, 200, 210 and 240, such as the recognized targets, the bounding boxes, the translation functions T and the counts.

According to a preferred embodiment, the method of monitoring comprises a step of generating an alarm and/or assessment signal 260 as a function of the generated counting value.

Advantageously, the method of monitoring targets 100 can properly detect the targets in an environment, thereby reducing the required computational cost.

Advantageously, the method of monitoring targets 100 uses a first image stream with a low frame rate, thereby reducing the computational cost required for counting targets in the environment. Moreover, the low frame rate that can be used affords optimization of computational resources, and avoids repeated recognition of targets that have already been recognized in previous frames.

Advantageously, the method of monitoring 100 can count targets arranged in an environment at close distances, such as in crowded contexts or orchards. Furthermore, the method of monitoring 100 can distinguish small targets such as apples. Further contexts of use might be controlling and counting target movement on a belt conveyor in a factory, or counting vehicles or other objects on a road.

Advantageously, by defining translation function between successive frames, the method of monitoring targets 100 obviates the problems associated with speed variations between the targets and the imaging device 30.

According to a preferred embodiment, the method of monitoring targets 100 can be used for stationary targets 10 and/or moving targets in one embodiment 20 with respect to the reference frame, and to the imaging device 4. It should be noted that the method of monitoring targets 100 can be used by moving the imaging device 30 relative to stationary and/or moving targets 10.

For the purposes of the present invention, the method of monitoring targets 100 comprises a debugging/testing step to control the steps of the method. In particular, the debugging/testing step comprises the steps of:
- Displaying the captured image stream;
- Storing each image of the image stream;
- Tracking metrics for each step performed on the captured images;
- Changing logging levels

Advantageously, the debugging/testing step allows the method to be improved and optimized for monitoring targets 100.

It should be noted that this debugging/testing step is applicable to each step of the method of monitoring targets 100.

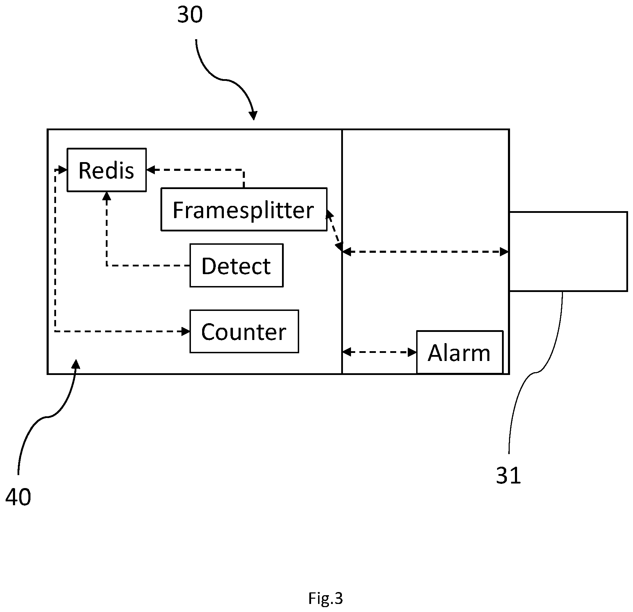

The present invention further addresses an imaging device 30 configured to implement the method of monitoring targets 100, as shown in Figure 3.

The imaging device comprises a camera 31 configured to capture the first image stream and preferably also the second image stream. In particular, the camera 31 is configured to capture images of the environment in which it is located.

According to a preferred embodiment, the camera 31 comprises optical sensors, for example of RGB type for color pickup of the first image stream, and preferably one or more infrared sensors for infrared shooting. Preferably, the sensors comprise a global shutter, having no motion blur in moving shots. The sensors may have a specific Field of View (FOV) representing the horizontal and vertical viewing angle supported by each sensor. In other words, the optical sensors and the infrared sensors have an FOV that can determine the imaged area given a distance of the imaged environment.

According to a preferred embodiment, the use of optical and infrared sensors can generate, thanks to the method, a combined image stream in which each pixel of the first image stream is associated with a distance value, if available according to the above described steps.

Preferably, the camera 31 is configured to operate with an adjustable frame rate and according to the environment in which the camera 31 is placed, as well as according to possible movements of the camera with respect to the environment or vice versa.

According to a preferred embodiment, the camera is of the RGB-D or RGB type.

According to an alternative embodiment, the imaging device comprises a camera for two-dimensional color shots (first image stream) and depth sensors (second image stream). Advantageously, the monitoring method 100 allows combination of the first and second image streams.

The imaging device 30 comprises a data processing unit 40 in signal communication with the camera 31. The data processing unit 40 is configured to receive the first image stream and the second image stream and process them by carrying out the above steps of the method of monitoring targets 100.

According to a preferred embodiment, the data processing unit 40 comprises a memory module (Redis) configured to receive data, such as the first image stream and the second image stream, and processed data such as the bounding boxes and save them. Preferably, the data processing unit 40 comprises a synchronization module (Framesplitter), in signal communication with the memory module Redis, and configured to synchronize the first image stream and the second image stream, if any. This synchronization module Framesplitter is also configured to save the synchronizations on the memory module Redis. The data processing unit 40 further comprises a detection module (Detect), in signal communication with the memory module Redis and configured to recognize targets and associate corresponding bounding boxes with the recognized targets 10. Preferably, the neural network-based algorithm resides in the detection module, Detect. More preferably, the detection module Detect is in signal communication with a geolocation module to receive a specific neural network-based algorithm according to the environment in which the imaging device 30 is located. It should be noted that the detection module Detect is configured to save the recognized targets 10 and the generated bounding boxes 50 in the memory module Redis.

According to the embodiment of Figures 2 and 4, the data processing unit 40 comprises a counting module (Counter) in signal communication with the memory module Redis and configured to carry out the steps 150, 180, 190, 200, 210, 220 as well as the step of counting 250 the recognized targets. The counting module Counter is also configured to save the generated data in the memory module Redis.

According to a preferred embodiment, the imaging device 30 comprises an alarm module (Alarm) in signal communication with the data processing unit 40, preferably with the memory module Redis and configured to generate alarm and/or assessment signals as a function of threshold values.

According to a preferred embodiment, the imaging device 30 comprises a remote control module in signal communication with a device external to the imaging device 30 and associated with a user. Preferably, the remote control module is configured to remotely control the imaging device 30 and allow display of the data saved in the memory module Redis.

It should be noted that the imaging device 30 of the present invention may be advantageously used in counting targets in an environment such as social distancing and agriculture.

Advantageously, the method of monitoring targets can reduce the necessary computational cost and resource expenditure by allowing on-site use of the imaging device, at EDGE level, requiring power supply only. In particular, due to the low computational cost and resource expenditure, the power supply may be provided directly on site with the imaging device 20 not being connected to a power line. For example, the power supply required by the imaging device may be provided by renewable sources, for example a solar panel, or pre-charged batteries.

Advantageously, the imaging device is cost-effective in that it uses modules able to execute a method that optimizes the use of resources.

### COMPARATIVE EXAMPLE

By way of example, an example of use of the method of monitoring targets 100 of the present invention will be described in comparison with a conventional method. The method of monitoring targets 100 can operate at a very low frame rate, of the order of 6/8 frames per second unlike conventional methods. This may reduce the number of times that the same object passing across the scene is recognized by neural network algorithms.

For this purpose, the following table shows the number of recalculations of the steps 130 and 140 for the same target (the larger the number the lower the efficiency) in the environment as viewed by the imaging device 30. The operating conditions of this example are as follows:
- a tractor running a row 3 meters wide at approximately 6 km/h (1.66 m/s);
- with a vertically mounted RGB-D camera having a FOV of H:69.4 / V:42.5/ D:77 and 640x480 frames, at the center of the tractor.

It should be noted that in the above conditions an imaged scene is about 150 cm away with a height of about 206 cm and a width of about 115 cm (with a vertically mounted camera) on the plane of the orchard.

| Frames analyzed per second (FPS) | InterFrame translation (cm) | # Detect repetitions for each object entering the scene | Computational load index |
|---|---|---|---|
| 6 | 27.8 | 4.1 | 100 (ref) |
| 15 | 11.1 | 10.4 | 254 |
| 30 | 5.6 | 20.7 | 505 |
| 60 | 2.8 | 41.4 | 1010 |

Two advantages of using the method or monitoring targets 100 are shown in the table:
- the highest efficiency is achieved with the lowest number of frames per second, due to the reduction of the number of processing operations that the framesplitter (optional), detect and counter units must perform. This enables EDGE solutions (for example on board the tractor);
- an algorithm based on the distance or IOU between detections of targets on successive frames requires frame rates (FPS) enabling to find the same object in the next frame at most translated by a small distance to be still, according to the algorithm, within the IOU intersection threshold or within the distance of the same object in the previous frame, and preventing the object to be masked by other detected objects close thereto. A frame rate of 30 FPS is not sufficient for a 5 cm object (for example, an apple), whereas a 50% target intersection in successive frames of the apple requires a frame rate of 60 FPS, leading to a higher resource expenditure. In addition, rapid acceleration of the tractor may lead to worse counting (unless using 90 FPS). This effectively precludes the possibility of using such conventional Edge algorithms for small target sizes .

The method of monitoring targets 100 can use a low frame rate as it includes assessment of the translation function from one frame to another and can thus address recognition and subsequent counting of targets while avoiding detection errors for adjacent targets.

Advantageously, the method of monitoring targets 100 is particularly suitable in cases where the targets to be recognized can be considered as a single block (high density) with respect to the imaging device 30 and can be arbitrarily moved with respect to each other.

## Claims

1. A method of monitoring (100) targets (10) located in an environment (20) using an imaging device (30), said method comprising the steps of:
- capturing (110) by the imaging device (30) a first image stream of the environment (20), the first captured image stream comprising a plurality of temporally successive frames (60)
- sending (120) the first image stream to a data processing unit (40);
- recognizing (130) one or more targets for each frame (60) of the image stream;
- associating (140) a bounding box (50) with each recognized target (10) ;
**characterized in that** it comprises the steps of:
- defining (150) a translation function (T) for each bounding box (50) as a function of successive frames (60) of the first captured image stream;
- associating (180) the defined translation function (T) with each bounding box (50) of a frame (60);
- translating (190) each bounding box (50) with the defined translation function (T) associated therewith to subsequent frames (60) using the translation function;
- comparing (200) the translated bounding boxes (70) with the bounding boxes (50) associated with the targets recognized in the frame (60) to which the bounding boxes (70) of the previous frames (60) have been translated;
- updating (210) the one or more recognized targets (10) in each frame (60) as a function of the comparison.

2. A method of monitoring targets (100) as claimed in claim 1, wherein the step of defining a translation function (150) comprises the steps of:
- detecting (151) a relative movement between the recognized targets (10) in the environment (20) in successive frames (60) as a function of the bounding boxes (50) associated with the recognized targets (10);
- calculating (152) a translation vector as a function of the detected movement;
- associating (153) the calculated translation vector with the translation function (T).

3. A method of monitoring targets (100) as claimed in claim 1, wherein the step of defining (150) a translation function comprises the steps of:
- determining (154) a relative position between the bounding boxes (50) in a frame (60) and the bounding boxes (50) of one or more subsequent frames;
- calculating (155) a reference trajectory as a function of the determined relative positions;
- associating (156) the reference trajectory with the translation function (T).

4. A method of monitoring targets (100) as claimed in claim 1, wherein the step of defining (150) a translation function comprises the steps of:
- selecting (157) a plurality of frames (60);
- defining (158) one or more distinctive elements in the selected frames (60), representative of the environment (20);
- calculating (159) a homography between selected frames (60) using homography algorithms as a function of the defined distinctive elements;
- defining (160) a relative displacement of the distinctive elements between the selected frames (60) as a function of the homography;
- associating (161) the relative displacement with the translation function (T).

5. A method of tracking targets (100) as claimed in claim 1, wherein the step of defining (150) a translation function comprises the steps of:
- capturing (162) an odometry dataset by the imaging device (30);
- sending (163) the odometry dataset to the data processing unit (40);
- defining (164) a translation as a function of the first image stream and of the odometry dataset;
- associating (165) the translation with the translation function (T).

6. A method of monitoring targets (100) as claimed in any of claims 1 to 5, wherein the step of comparing the translated bounding boxes with the bounding boxes associated with the recognized targets in the frame to which the bounding boxes of the previous frames (200) have been translated comprises the steps of:
- determining (201), for each bounding box (50, 70) of the frame (60) to which the bounding boxes (70) have been translated an overlap value as a function of the translated bounding boxes (70) and the bounding boxes (50) of the frame (60) to which the bounding boxes (70) have been translated;
- generating (202) a recognition signal if the overlap value is within a first threshold range of values;
- generating (203) a correction signal if the overlap value is within a second threshold range;
- generating (204) an addition signal if the overlap value is within a third threshold range.

7. A method of monitoring targets (100) as claimed in claim 6, wherein the step of updating the one or more recognized targets (210) comprises the steps of:
- correcting (211) each bounding box (50, 70) if a correction signal has been generated for that bounding box (50);
- adding (212) the bounding box (50) to the frame to which the bounding box (70) has been translated if an addition signal has been generated.

8. A method of monitoring targets (100) as claimed in claims 1 to 7, wherein the step of translating bounding boxes (190) comprises the steps of:
- associating (141) an age value with each bounding box (50), as a function of the first image stream,
- translating (142) the bounding boxes (50) to the subsequent frames if the age value associated with those bounding boxes (50) is lower than an age threshold value associated with the environment (20) and with the relative movement between the recognized targets (10) in the environment (20) and the imaging device (30);

9. A method of monitoring targets (100) as claimed in any of claims 1 to 8, wherein the method comprises the step of converting each frame of the first image stream (220) to a respective synthetic frame, the step of converting each frame (220) comprising the steps of:
- associating (221) position values with each bounding box (50) of a frame (60);
- constructing (222) a synthetic frame for each frame (60) as a function of the position values of the bounding boxes (50);
- associating (223) each frame (60) with its respective synthetic frame.

10. An imaging device (30) configured to implement the method of monitoring targets (100) as claimed in claims 1 to 9, and comprising:
- a camera (31) configured to capture the first image stream
- a processing unit (40) in signal communication with the camera (31).
